# EUROPÄISCHE PATENTANMELDUNG

(11) **EP 3 270 358 A1**
(43) Veröffentlichungstag der Anmeldung: **17.01.2018**
(21) Anmeldenummer: 17450005.8
(22) Anmeldetag: 06.06.2017
(51) Int. Cl.: G07C 9/00, E05B 47/06, G06K 7/10

(54) **ZUTRITTSKONTROLLVORRICHTUNG**

(30) Priorität: 15.07.2016 AT 3402016
(71) Anmelder: EVVA Sicherheitstechnologie GmbH, 1120 Wien (AT)
(72) Erfinder: Enne, Reinhard J., A-1120 Wien (AT)
(74) Vertreter: Keschmann, Marc

(57) **Zusammenfassung**

Bei einer Zutrittskontrollvorrichtung umfassend einen Schließzylinder (1,19) mit einem Schlüsselkanal (3), einen in den Schlüsselkanal (3) einführbaren Schlüssel (6,20) und Mittel zur drahtlosen Energieübertragung zwischen dem Schließzylinder (1,19) und dem Schlüssel (6,20), umfassen die Energieübertragungsmittel wenigstens eine erste kapazitive Koppelstrecke (28) zwischen dem Schlüssel (6,20) und dem Schließzylinder (1,19), über welche sich im in den Schlüsselkanal (3) eingeführten Zustand des Schlüssels (6,20) ein Wechselstromkreis (21) schließt, der einen Energiespeicher und/oder einen elektrischen Verbraucher speist.

## Beschreibung

Die Erfindung betrifft eine Zutrittskontrollvorrichtung umfassend einen Schließzylinder mit einem Schlüsselkanal, einen in den Schlüsselkanal einführbaren Schlüssel und Mittel zur drahtlosen Energieübertragung zwischen dem Schließzylinder und dem Schlüssel.

An moderne Schließanlagen werden vielfältige Anforderungen gestellt. Schließanlagen kommen meist in größeren Gebäuden zum Einsatz, in denen der Zutritt zu einer Vielzahl von Räumen oder Gebäudeabschnitten individuell kontrolliert werden soll. Um dem Bedürfnis nach häufig wechselnden Berechtigungen Rechnung zu tragen, werden Schließanlagen häufig mit Zutrittskontrollvorrichtungen ausgestattet, die elektronische Berechtigungsabfragemittel aufweisen. Die Berechtigungsinformationen sind auf elektronischen Identmedien gespeichert.

Unter Zutrittskontrollvorrichtungen im Sinne der Erfindung sind beispielsweise solche Vorrichtungen zu verstehen, mit denen ein Verfahren zur Zutrittskontrolle insbesondere in Gebäuden durchgeführt werden kann, bei dem eine uni- oder bidirektionale Datenübermittlung zwischen einem elektronischen Schlüssel und einer Schließeinrichtung bzw. einem Schloss stattfindet und in der Zutrittskontrollvorrichtung eine Zutrittsberechtigungsprüfung vorgenommen wird, wobei in Abhängigkeit von der festgestellten Zutrittsberechtigung ein Sperrmittel zum wahlweisen Freigeben oder Sperren des Zutritts angesteuert wird.

Unter einem Sperrmittel ist im Rahmen der Erfindung z.B. ein mechanisch wirkendes Sperrelement, das zwischen einer Sperr- und einer Freigabestellung bewegt werden kann, ein mechanisches oder magnetisches Kupplungselement, das ein Betätigungselement, wie z.B. einen in einem Schlüsselkanal eines drehbaren Zylinderkerns eingeführten Schlüssel, mit einem Sperrglied koppelt oder entkoppelt, oder ein elektrisch sperr- und/oder freigebbares Sperrelement, wie z.B. ein elektrischer Türöffner, zu verstehen.

Zutrittskontrollvorrichtungen dienen dabei insbesondere dazu, den Zutritt zu Räumen in Abhängigkeit von der Zutrittsberechtigung zu versperren oder freizugeben und sind dementsprechend meist zum Einbau in Türen, Fenstern und dgl. vorgesehen.

Für verschiedene Funktionen einer Zutrittskontrollvorrichtung ist elektrische Energie erforderlich, z.B. für die Feststellung der Zutrittsberechtigung auf Grund von elektronischen Berechtigungsinformationen. Die elektrische Energie wird hierbei sowohl für das Senden von Daten von einem Schlüssel bzw. Identmedium zu der Zutrittskontrolleinheit und für das Empfangen der Daten in der Zutrittskontrolleinheit als auch für die Auswertung der empfangenen Daten benötigt.

Es sind verschiedene Verfahren für die Nahfeldkommunikation bekannt, wie z.B. nach dem RFID- oder NFC-Standard, bei denen lediglich empfängerseitig, d.h. schlossseitig, ein elektrischer Energiespeicher vorgesehen ist. Zwischen dem Empfänger und dem Sender erfolgt im Zuge einer Berechtigungsabfrage eine Energieübertragung über eine Kopplung auf der Basis magnetischer Wechselfelder, sodass der Sender, d.h. das Identmedium, die für die Datenübertragung erforderliche Energie vom Empfänger erhält. Das Identmedium ist dabei häufig als passiver RFID- oder NFC-Transponder ausgebildet.

Im Rahmen der Energieübertragung über eine Kopplung auf der Basis magnetischer Wechselfelder treten nicht unerhebliche Energieverluste auf. Diese umfassen Streuverluste, Wirbelströme, die z.B. in im Nahbereich angeordneten metallischen Bauteilen induziert werden, sowie das Absorbieren der Energie des Antennenfelds in Materialien mit hoher Dielektrizitätskonstante. Die Energieverluste haben einen hohen Stromverbrauch zur Folge, sodass der z.B. als Batterie ausgebildete, in einer schlossseitigen Komponente angeordnete Energiespeicher häufig ausgetauscht werden muss, was mit einem hohen Handhabungsaufwand und einer geringen Benutzerfreundlichkeit verbunden ist.

Es sind auch Zutrittskontrollvorrichtungen bekannt geworden, bei denen die elektrische Energie aus dem Schließzylinder kontaktbehaftet an den Schlüssel übertragen wird, wobei der Schlüssel bevorzugt auch kontaktbehaftet ausgelesen wird. Diese Systeme haben jedoch den Nachteil, dass die kontaktbehaftete Verbindung nicht zuverlässig funktioniert, z.B. wegen Fettanteilen, Oxidation oder anderen Verunreinigungen auf den elektrischen Kontakten.

Die vorliegende Erfindung zielt daher darauf ab, eine Zutrittskontrollvorrichtung dahingehend weiterzubilden, dass die Verluste bei der Energieübertragung zwischen einem Schließzylinder und einem Schlüssel verringert werden ohne die Zuverlässigkeit der Energieübertragung zu beeinträchtigen.

Zur Lösung dieser Aufgabe sieht die Erfindung bei einer Zutrittskontrollvorrichtung der eingangs genannten Art im Wesentlichen vor, dass die Energieübertragungsmittel wenigstens eine erste kapazitive Koppelstrecke zwischen dem Schlüssel und dem Schließzylinder umfassen, über welche sich im in den Schlüsselkanal eingeführten Zustand des Schlüssels ein Wechselstromkreis schließt, der einen Energiespeicher und/oder einen elektrischen Verbraucher speist. Die Energieübertragung erfolgt somit über eine kapazitive Kopplung, welche sich durch überaus geringe Energieverluste auszeichnet, und zwar insbesondere dann, wenn die kapazitive Koppelstrecke ausreichend kurz ist, wie dies bei der erfindungsgemäßen Koppelstrecke zwischen dem Schließzylinder und dem in den Schlüsselkanal des Schließzylinders eingeführten Schlüssel der Fall ist. Die Energieübertragung kann dabei entweder vom Schlüssel auf den Schließzylinder oder umgekehrt vom Schließzylinder auf den Schlüssel erfolgen. Im ersten Fall ist der vom Wechselstromkreis gespeiste Energiespeicher oder elektrische Verbraucher im Schließzylinder oder einem mit diesem elektrisch verbundenen Element angeordnet. Im zweiten Fall ist der vom Wechselstromkreis gespeiste Energiespeicher oder elektrische Verbraucher im Schlüssel angeordnet.

Die erste kapazitive Koppelstrecke erstreckt sich hierbei unmittelbar zwischen dem Schlüssel und dem Schließzylinder, d.h. dass die Koppelstrecke lediglich über einen Luftspalt zwischen Schlüssel und dem Schließzylinder führt ohne dass weitere Bauteile dazwischen angeordnet sind.

Um einen sich durch den Schlüssel und den Schließzylinder erstreckenden Wechselstromkreis zu verwirklichen, sind zwei elektrische Verbindungen zwischen dem Schlüssel und dem Schließzylinder erforderlich. Erfindungsgemäß wird zumindest eine der zwei elektrischen Verbindungen durch eine kapazitive Koppelstrecke ausgebildet. Die zweite Verbindung kann durch eine kontaktbehaftete Verbindung gebildet sein. Bevorzugt ist die zweite Verbindung aber ebenfalls von einer kapazitiven Koppelstrecke zwischen dem Schlüssel und dem Schließzylinder gebildet. Eine bevorzugte Ausbildung sieht in diesem Zusammenhang vor, dass die Energieübertragungsmittel weiters eine zweite kapazitive Koppelstrecke zwischen dem Schlüssel und dem Schließzylinder umfassen, über welche sich der Wechselstromkreis im in den Schlüsselkanal eingeführten Zustand des Schlüssels schließt. Die zweite kapazitive Koppelstrecke erstreckt sich bevorzugt unmittelbar zwischen dem Schlüssel und dem Schließzylinder, d.h. dass die Koppelstrecke lediglich über einen Luftspalt zwischen Schlüssel und dem Schließzylinder führt ohne dass weitere Bauteile dazwischen angeordnet sind.

Eine bevorzugte Ausführung sieht vor, dass die erste und ggf. die zweite Koppelstrecke jeweils zwischen einer Koppelelektrode des Schlüssels und einer Koppelelektrode des Schließzylinders ausgebildet ist. Die beiden Koppelelektroden der jeweiligen Koppelstrecke bilden innerhalb des Wechselstromkreises dabei einen Kondensator aus. Bevorzugt sind die beiden Koppelelektroden der jeweiligen Koppelstrecke im in den Schlüsselkanal eingeführten Zustand des Schlüssels in einem Abstand von weniger als 5cm, bevorzugt weniger als 3cm, bevorzugt weniger als 1 cm, bevorzugt weniger als 5mm, bevorzugt weniger als 2mm, bevorzugt weniger als 1mm, bevorzugt weniger als 0,5mm, voneinander angeordnet. Dies gewährleistet eine hohe Qualität der kapazitiven Kopplung, sodass die Energieverluste gering gehalten werden können.

Die Qualität der Energieübertragung kann noch dadurch verbessert werden, dass die Wechselspannungsfrequenz im Wechselstromkreis > 10 Hertz, insbesondere > 50 Hertz beträgt, da der kapazitive Blindwiderstand des oben genannten Kondensators umso geringer ist, je größer die Frequenz der anliegenden Spannung ist. Auch Ausführungen im kHz- bzw. bis in den MHz-Bereich sind bevorzugt, wenn z.B. ein sehr kleiner Koppelblindwiderstand benötigt wird.

Eine bevorzugte Anordnung der Koppelelektrode(n) sieht vor, dass die Koppelelektrode(n) des Schlüssels an oder in einem Schlüsselbart des Schlüssels angeordnet oder von diesem gebildet ist bzw. sind. Die Koppelelektrode(n) des Schließzylinders ist bzw. sind vorzugsweise so angeordnet, dass sie dem Schlüsselkanal zugewandt ist bzw. sind. Dies ergibt in Kombination eine Anordnung, bei der die Koppelelektrode(n) des Schlüssels und die Koppelelektrode(n) des Schließzylinders im in den Schlüsselkanal eingeführten Zustand des Schlüssels gegenüberliegend angeordnet sind, sodass die Koppelelektroden der jeweiligen Koppelstrecke im in den Schlüsselkanal eingeführten Zustand des Schlüssels besonders nah aneinander zu liegen kommen, nämlich lediglich 0,1-0,5mm voneinander entfernt. Bevorzugt können sich Abstände von < 0,1mm ergeben, bevorzugt auch < 1µm. Im Fall der Anordnung von zwei Koppelelektroden am bzw. im Schlüssel, wobei eine Koppelelektrode für die erste Koppelstrecke und die andere Koppelelektrode für die zweite Koppelstrecke vorgesehen ist, können diese an beiden gegenüberliegenden Flächen des Schlüsselbarts des Schlüssels angeordnet sein. Wenn, wie dies einer bevorzugten Ausbildung entspricht, der Schlüssel als Flachschlüssel mit einem entsprechend flach ausgebildeten Schlüsselbart ausgebildet ist, sind die Koppelelektroden von den zwei gegenüberliegenden Oberflächen des Schlüsselbarts ausgebildet. Die Koppelelektroden können dabei vorzugsweise von einer metallischen Beschichtung des Schlüsselbarts gebildet sein. Alternativ können die Koppelelektroden von dem metallischen Körper des Schlüsselbarts gebildet sein, wobei die als Koppelelektroden verwendeten Schlüsselbarthälften durch eine elektrisch isolierende Schicht voneinander galvanisch getrennt sind.

Eine weitere bevorzugte Ausführungsform sieht vor, dass die Koppelelektroden des Schließzylinders von bezüglich des Schlüsselkanals gegenüberliegenden Bereichen eines drehbaren Zylinderkerns gebildet sind. Die beiden gegenüberliegenden Bereiche können beispielsweise als Kernhälften ausgebildet sein. Die beiden gegenüberliegenden Bereiche sind durch einen geeigneten Isolationsbereich galvanisch voneinander getrennt, wobei zwischen die beiden Bereiche der Energiespeicher oder der zu speisende Verbraucher geschaltet ist.

Eine weitere bevorzugte Ausbildung sieht vor, dass die für die erste kapazitive Koppelstrecke vorgesehene Koppelelektrode des Schlüssels an oder in einem Schlüsselbart des Schlüssels angeordnet oder von diesem gebildet ist und dass die für die zweite kapazitive Koppelstrecke vorgesehene Koppelelektrode des Schlüssels an oder in der Reide des Schlüssels angeordnet oder von dieser gebildet ist.

In diesem Fall ist für die Koppelelektroden des Schließzylinders vorgesehen, dass die für die erste kapazitive Koppelstrecke vorgesehene Koppelelektrode des Schließzylinders an oder in einem drehbaren Zylinderkern des Schlüssels angeordnet oder von diesem gebildet ist und dass die für die zweite kapazitive Koppelstrecke vorgesehene Koppelelektrode des Schließzylinders an oder in einem Zylindergehäuse des Schließzylinders angeordnet oder von diesem gebildet ist.

Wie bereits erwähnt kann die über die erste und ggf. zweite kapazitive Koppelstrecke erfolgende Energieübertragung entweder vom Schlüssel zum Schließzylinder oder umgekehrt vom Schließzylinder zum Schlüssel vorgenommen werden. Dementsprechend ist in dem einen oder dem anderen der beiden Bauteile eine Stromquelle vorgesehen. Diesbezüglich sieht eine bevorzugte Ausbildung vor, dass der Wechselstromkreis eine Stromquelle umfasst, die in einem Bauteil ausgewählt aus Schlüssel und Schließzylinder oder mit dem Schließzylinder elektrisch verbundenem Element angeordnet ist, und dass der vom Wechselstromkreis gespeiste Energiespeicher bzw. elektrische Verbraucher im anderen Bauteil ausgewählt aus Schlüssel und Schließzylinder oder mit dem Schließzylinder elektrisch verbundenem Element angeordnet ist.

Die Stromquelle kann von einem elektrischen Energiespeicher, wie z.B. einer Batterie, gebildet sein oder von einem Energiewandler zum Umwandeln von Bewegungsenergie in elektrische Energie. Besonders vorteilhaft ist hierbei das Vorsehen eines Energiewandlers, der entweder im Schlüssel oder im Schließzylinder oder in einem mit diesem mechanisch gekoppelten Bauteil angeordnet ist. Der Energiewandler kann beispielsweise entsprechend der in der AT 501725 B1, AT 509465 B1 und/oder AT 502682 B1 beschriebenen Bauweise ausgebildet sein. Derartige Wandler sind beispielsweise als elektrischer Generator ausgebildet und weisen einen Magnetkreis und eine von dessen Magnetfluss durchsetzte Induktionsspule auf, wobei der Magnetkreis oder die Induktionsspule als beweglicher Bauteil und der jeweils andere Teil als feststehender Bauteil ausgebildet ist. Dabei wird durch die Bewegung des beweglich angeordneten Bauteils im Induktionssystem eine Induktionsspannung induziert. Der bewegliche Bauteil kann als Schwungrad ausgebildet sein, wie dies beispielsweise aus der EP 1039074 A1 bekannt geworden ist. Durch eine derartige Ausbildung wird eine autarke Energieversorgung sichergestellt, da die vom Schwungradgenerator erzeugte elektrische Energie in einem Energiespeicher zwischengespeichert werden kann und im Bedarfsfall dem elektrischen Schaltkreis für die Zutrittsberechtigungsprüfung bzw. für die elektrische Betätigung des Schlosses zur Verfügung gestellt wird. Schwungradgeneratoren sind hierbei besonders für die Integration in Schlüssel geeignet, da das Schwungrad in diesem Fall ähnlich wie bei Armbanduhren durch das ständige Mittragen und die dabei verursachten mechanischen Erschütterungen in Bewegung versetzt wird.

Eine andere Ausbildung des Energiewandlers, die für die Integration in den Schließzylinder bevorzugt ist, sieht vor, dass der bewegliche Bauteil des Wandlers durch die Einführbewegung des Schlüssels in den Schlüsselkanal des Schließzylinders angetrieben ist. Insbesondere tritt beim Einführen des Schlüssels eine Kollision mit dem beweglich angeordneten Teil des Wandlersystems oder mit einem Mitnehmer auf, der den beweglich angeordneten Teil auslenkt, wobei dieser nach Freigabe frei ausschwingen kann, wobei bei jeder Periode des Schwingvorgangs dem System elektrische Energie entzogen werden kann. Bevorzugt ist hierbei vorgesehen, dass der bewegliche Bauteil des Wandlers von einer Blattfeder gehalten ist und zu Schwingbewegungen in lediglich einer Ebene auslenkbar angeordnet ist. Dadurch, dass der mechanisch bewegbare Teil des Wandlersystems von einer Blattfeder gehalten wird, wird eine reibungsfreie Führung des bewegten Teils erzielt, wobei durch die Ausgestaltung der Feder als Blattfeder lediglich eine Bewegung in einer einzigen Ebene zugelassen wird, sodass eine exakte Führung gewährleistet ist. Durch eine derartige Ausbildung können die Abstände zwischen dem beweglichen Bauteil und dem feststehenden Bauteil sehr klein gewählt werden, da durch die exakte Führung keine Toleranzen zu berücksichtigen sind. Durch die Verwendung einer Blattfeder als Halteteil für den beweglichen Bauteil wird nach einer entsprechenden Auslenkung des Bauteils eine Schwingbewegung ausgeführt, sodass in der Induktionsspule magnetische Flussänderungen pro Zeiteinheit hervorgerufen werden und somit eine Spannung induziert wird. Die Charakteristik der Blattfeder kann hierbei so eingestellt werden, dass eine Wechselspannungsfrequenz von > 50 Hertz, insbesondere 50-100 Hertz, 100-200 Hz und/oder 200-300 Hz, erzeugt wird, wodurch der kapazitive Blindwiderstand des durch die beiden Koppelelektroden der kapazitiven Koppelstrecke gebildeten Kondensators verringert werden kann.

Es reicht im Rahmen der Erfindung aus, wenn der Energiewandler relativ wenig elektrische Energie erzeugt, weil auf Grund der durch die Erfindung erreichten verlustarmen Energieübertragung noch ausreichend elektrische Energie beim Verbraucher ankommt. Der Energiewandler ist hierbei bevorzugt im Schließzylinder oder einem mit dem Schließzylinder elektrisch verbundenen Element angeordnet und speist über die wenigstens eine kapazitive Koppelstrecke den Schlüssel mit elektrischer Energie und speist darüber hinaus auch die im Schließzylinder bzw. in dem mit dem Schließzylinder elektrisch verbundenen Element angeordneten Verbraucher, wie z.B. eine Zutrittskontrollschaltung zur Überprüfung der Zutrittsberechtigung, mit elektrischer Energie.

Allgemein kann die Überprüfung der Zutrittsberechtigung im Rahmen der vorliegenden Erfindung auf verschiedene Art und Weise erfolgen. Der Schlüsselbart des Schlüssels kann beispielsweise eine mechanisch abtastbare Codierung aufweisen, die eine Längsprofilierung des Schlüsselbarts und/oder an einer oder an zwei gegenüberliegenden Kanten des Schlüsselbarts eine Mehrzahl von aufeinander folgenden Erhebungen und Vertiefungen mit den Erhebungen jeweils zugeordneten Steuerkanten umfasst, die zum Betätigen von Sperrelementen, wie z.B. Stiftzuhaltungen, des Schließzylinders ausgebildet sind.

Zusätzlich zur mechanisch abtastbaren Codierung oder alternativ hierzu können elektronisch codierte Berechtigungsinformationen vorgesehen sein. Die Erfindung ist zu diesem Zweck vorzugsweise derart weitergebildet, dass der Schlüssel einen elektronischen Speicher für Berechtigungsinformationen umfasst und dass der Schließzylinder oder ein mit diesem verbundenes Element eine Zutrittskontrollschaltung umfasst, wobei Datenübertragungsmittel vorgesehen sind, sodass die Zutrittskontrollschaltung in Abhängigkeit von den Berechtigungsinformationen den Zutritt freigibt oder sperrt.

Die Berechtigungsinformationen liegen beispielsweise als elektronischer Code vor, der von den Leseeinheiten des Schließzylinders elektronisch ausgelesen und hinsichtlich der Zutrittsberechtigung ausgewertet werden kann. Dabei ist nicht zwingend erforderlich, dass der elektronische Code tatsächlich übertragen wird. Vielmehr kann die Zutrittsberechtigung auch mittels eines Authentifizierungs- und/oder Identifizierungsprotokolls zwischen der Zutrittskontrollschaltung und dem Schlüssel ermittelt werden, d.h. mit kryptographische Verfahren, mit denen ohne Übertragung der sensiblen Codes festgestellt werden kann, ob der Schlüssel und die Zutrittskontrollschaltung über dasselbe Geheimnis verfügen, welches einer Zutrittsberechtigung entspricht.

Unter Berechtigungsinformationen sind z.B. Identifikations- bzw. Zugangscodes und/oder Zutrittsbedingungen wie z.B. berechtigte Zutrittszeit, berechtigter Zutrittstag, berechtigtes Zutrittsdatum eines Benutzers und dgl. zu verstehen. Insbesondere werden die Berechtigungsinformationen von einem geheimen, schließzylinderindividuellen Schlüssel, d.h. einer den Schließzylinder identifizierenden Kennung, und optional einer zeitlichen Berechtigungseinschränkung gebildet.

Die Datenübertragung zwischen dem Schlüssel und dem Schließzylinder, über welche die Berechtigungsdaten abgefragt werden, um die Zutrittsberechtigung festzustellen, kann grundsätzlich beliebig erfolgen. Besonders bevorzugt erfolgt die Datenübermittlung über eine kapazitive Kopplung zwischen dem Schlüssel und dem Schließzylinder, wobei die für die Energieübertragung bereits vorgesehene(n) Koppelstrecke(n) mitverwendet werden kann bzw. können. Eine bevorzugte Ausbildung der Erfindung sieht in diesem Zusammenhang vor, dass die Datenübertragungsmittel die erste und/oder die zweite kapazitive Koppelstrecke zwischen dem Schlüssel und dem Schließzylinder umfassen. Dabei wird der Vorteil des sehr geringen Strombedarfs für die über die kapazitive Koppelstrecke erfolgende Datenkommunikation genutzt.

Die für die kapazitive Datenkommunikation schlüsselseitig erforderliche Elektronik kann vorzugsweise in der Reide des Schlüssels untergebracht werden.

Der Vorteil der kapazitiven Datenübertragung liegt weiters darin, dass die Datenübertragung zwischen dem Schlüssel und dem Schließzylinder mit Rücksicht auf die überaus geringe Länge der kapazitiven Koppelstrecke nicht abgehört oder abgefangen werden kann.

Alternativ können die Datenübertragungsmittel von den Energieübertragungsmitteln gesondert ausgebildet sein und z.B. zur induktiven drahtlosen oder Infrarot-Übermittlung von Daten zwischen dem Schlüssel und dem Schließzylinder ausgebildet sein. Die Datenübertragung erfolgt dann beispielsweise mittels Nahfeldkommunikation, insbesondere nach dem RFID-, NFC-, JCOP (Java Card OpenPlatform) oder MIFARE DESFire-Standard. Alternativ kann die Datenübermittlung auch über elektromagnetische Wellen, d.h. über ein Funksystem, erfolgen.

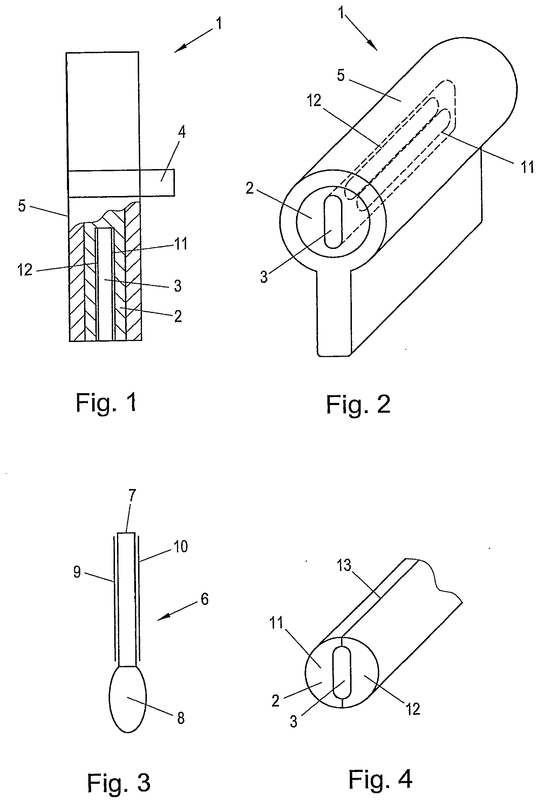

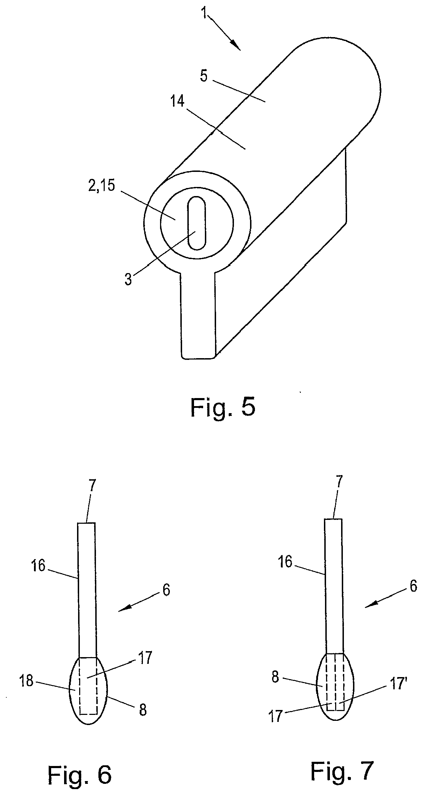

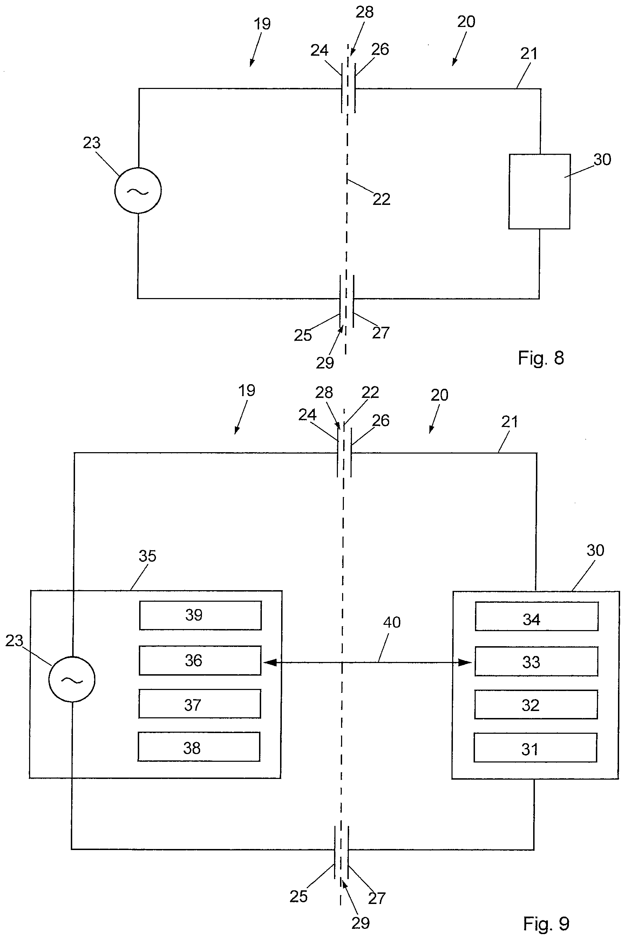

Die Erfindung wird nachfolgend anhand von in der Zeichnung schematisch dargestellten Ausführungsbeispielen näher erläutert. In dieser zeigen Fig. 1 einen Schließzylinder im Halbschnitt, Fig. 2 eine perspektivische Teilansicht des Schließzylinders gemäß Fig. 1, Fig. 3 einen Schlüssel zum Einführen in den Schließzylinder gemäß den Fig. 1 und 2, Fig. 4 eine Detailansicht eines Zylinderkerns gemäß einer alternativen Ausbildung des Schließzylinders, Fig. 5 eine weitere abgewandelte Ausbildung des Schließzylinders, Fig. 6 eine erste Ausführung eines Schlüssels zum Einführen in den Schließzylinder gemäß Fig. 5, Fig. 7 eine zweite Ausführung eines Schlüssels zum Einführen in den Schließzylinder gemäß Fig. 5, Fig. 8 ein Ersatzschaltbild eines Wechselstromkreises und Fig. 9 ein Ersatzschaltbild eines Wechselstromkreises mit in den Wechselstromkreis eingebundenen Komponenten des Schließzylinders und des Schlüssels.

In Fig. 1 ist ein Schließzylinder 1 dargestellt, der insbesondere als Europrofil-Zylinder ausgebildet ist. Der Schließzylinder 1 umfasst einen Zylinderkern 2, der einen Schlüsselkanal 3 aufweist und im Zylindergehäuse 5 drehbar gelagert ist. Die Drehbewegung des Zylinderkerns 2 ist gesperrt, bis die Anwesenheit eines berechtigten Schlüssels erkannt wird. Die Berechtigungsüberprüfung kann in beschriebener Weise elektronisch erfolgen. Mit der Drehbewegung des Zylinderkerns 2 ist die Sperrnase 4 gekoppelt, welche angeordnet ist, um einen Sperrriegel eines Schlosses oder dgl. zu betätigen.

Der zugehörige Schlüssel 6 ist in Fig. 3 dargestellt und umfasst einen Schlüsselbart 7 und eine Reide 8. Um nun einen Wechselstromkreis zu schaffen, der sich über den Schließzylinder 1 und den Schlüssel 6 schließt, um elektrische Energie zwischen dem Schließzylinder 1 und dem Schlüssel 6 zu übertragen und um ggf. Daten vom Schlüssel 6 zum Schließzylinder 1 und/oder umgekehrt zu übermitteln, weist der Schlüssel 6 an gegenüberliegenden Außenflächen des Schlüsselbartes 7 Koppelelektroden 9 und 10 auf. Der Schließzylinder 1 weist entsprechende Koppelelektroden 11 und 12 am oder im Zylinderkern 2 auf, insbesondere an den den Schlüsselkanal 3 begrenzenden Flächen. Wenn der Schlüsselbart 7 in den Schlüsselkanal 3 eingeführt ist, ergibt sich eine erste kapazitive Koppelstrecke zwischen den Koppelelektroden 10 und 11 und eine zweite kapazitive Koppelstrecke zwischen den Koppelelektroden 9 und 12.

Die Koppelektroden 11 und 12 können beispielsweise als elektrisch leitfähige Beschichtungen an den zwei gegenüberliegenden, den Schlüsselkanal 3 begrenzenden Flächen des Zylinderkerns 2 ausgebildet sein, Alternativ können die Koppelelektroden 11 und 12, wie in Fig. 4 gezeigt, auch als Zylinderkernhälften ausgebildet sein, welche durch eine in der Mittelebene verlaufende Isolationsschicht 13 voneinander getrennt sind.

Bei einer alternativen Ausbildung gemäß den Fig. 5-7 weist der Schließzylinder 1 eine Koppelelektrode 14 auf, welche vom Zylindergehäuse 5 gebildet wird, und eine Koppelelektrode 15, welche vom drehbaren Zylinderkern 2 gebildet ist. Der Schlüssel 6 weist eine Koppelelektrode 16 auf, die vom Schlüsselbart 7 gebildet ist, und eine Koppelelektrode 17, die von der Reide 8 gebildet ist oder in der Reide 8 angeordnet ist. Bei der Ausbildung gemäß Fig. 6 ist die Koppelelektrode 17 in der Reide 8 angeordnet und von einer Kunststoffummantelung 18 umgeben. Bei der Ausbildung gemäß Fig. 7 ist die Koppelelektrode 17 auf zwei Teilelektroden 17 und 17' aufgeteilt. Die Koppelektroden 14 und 17 bilden eine erste kapazitive Koppelstrecke und die Koppelektroden 15 und 16 bilden eine zweite kapazitive Koppelstrecke.

In Fig. 8 ist ein Ersatzschaltbild eines Wechselstromkreises 21 dargestellt, der einen Schließzylinder 19 und einen Schlüssel 20 umfasst. Die Bereiche des Schließzylinders 19 und des Schlüssels 20 sind dabei durch die Linie 22 schematisch voneinander getrennt. Der Schließzylinder 19 weist eine Wechselstrom- bzw. Spannungseinspeisung oder -quelle 23 auf, die wie bereits erwähnt z.B. von einem eine Wechselspannung erzeugenden Energiewandler oder einem Energiespeicher in Verbindung mit einer Wechselrichterschaltung gebildet sein kann. Der Schließzylinder 19 umfasst Koppelelektroden 24 und 25. Der Schlüssel 20 umfasst Koppelelektroden 26 und 27. Bei einem Zutrittswunsch werden die Koppelelektroden so zu- bzw. aneinander gebracht, dass sich zwischen den Koppelelektroden 24 und 26 eine erste kapazitive Koppelstrecke 28 und zwischen den Koppelelektroden 25 und 27 eine zweite kapazitive Koppelstrecke 29 ausbildet, über welche sich der Stromkreis 21 schließt, der einen Verbraucher 30 des Schlüssels 20 speist.

Die Darstellung gemäß Fig. 9 entspricht der Darstellung gemäß Fig. 8, wobei jedoch ergänzend die einzelnen Funktionskomponenten des Schlüssels und des Schließzylinders schematisch dargestellt sind, die für die Überprüfung der Zutrittsberechtigung und für die Freigabe des Zutritts erforderlich sind.

Schlüsselseitig umfasst der Verbraucher 30 einen Speicher 31 für Berechtigungsdaten, eine Steuerschaltung 32 und eine Datensende- und -empfangseinheit 33. Weiters kann der Schlüssel 20 Mittel 34 zur optischen und/oder akustischen Signalisierung aufweisen.

Sofern der Verbraucher 30 des Schlüssels 20 eine Gleichstromversorgung benötigt, kann der aus dem Wechselstromkreis 21 bezogene Wechselstrom mit Hilfe einer Gleichrichterschaltung in einen Gleichstrom gewandelt werden.

Der Schließzylinder 19 umfasst ebenfalls einen Verbraucher 35, der eine Datensende- und -empfangseinheit 36, eine Auswerteschaltung 37, eine Freigabeelektronik 38 und Mittel 39 zur optischen und/oder akustischen Signalisierung aufweist. Die Wechselstrom- bzw. Spannungsquelle 23 kann beispielsweise als Modulator oder Wechselrichter ausgebildet sein, um die gewünschte Wechselstromfrequenz bereitzustellen, wobei die Wechselstrom- bzw. Spannungsquelle 23 von einem Energiespeicher, wie z.B. einer Batterie gespeist werden kann.

Im in den Schlüsselkanal eingeführten Zustand des Schlüssels 20 findet über die kapazitiven Koppelstrecken 28 und 29 eine Energieversorgung des Schlüssels 20 statt. Im Zuge der Abfrage der Zutrittsberechtigung findet ein Datenaustausch 40 zwischen der Datensende- und -empfangseinheit 33 und der Datensende- und -empfangseinheit 36 statt, auf Grund dessen in der Auswerteschaltung 37 die vorhandene oder fehlende Zutrittsberechtigung festgestellt werden kann. Im Fall der vorhandenen Zutrittsberechtigung steuert die Freigabeelektronik 38 ein nicht dargestelltes Freigabeelement an, sodass der Zutritt freigegeben wird.

## Patentansprüche

1. Zutrittskontrollvorrichtung umfassend einen Schließzylinder (1,19) mit einem Schlüsselkanal (3), einen in den Schlüsselkanal (3) einführbaren Schlüssel (6,20) und Mittel zur drahtlosen Energieübertragung zwischen dem Schließzylinder (1,19) und dem Schlüssel (6,20), **dadurch gekennzeichnet, dass** die Energieübertragungsmittel wenigstens eine erste kapazitive Koppelstrecke (28) zwischen dem Schlüssel (6,20) und dem Schließzylinder (1,19) umfassen, über welche sich im in den Schlüsselkanal (3) eingeführten Zustand des Schlüssels (6,20) ein Wechselstromkreis (21) schließt, der einen Energiespeicher und/oder einen elektrischen Verbraucher speist.

2. Zutrittskontrollvorrichtung nach Anspruch 1, **dadurch gekennzeichnet, dass** die Energieübertragungsmittel weiters eine zweite kapazitive Koppelstrecke (29) zwischen dem Schlüssel (6,20) und dem Schließzylinder (1,19) umfassen, über welche sich der Wechselstromkreis (21) im in den Schlüsselkanal (3) eingeführten Zustand des Schlüssels (6,20) schließt.

3. Zutrittskontrollvorrichtung nach Anspruch 1 oder 2, **dadurch gekennzeichnet, dass** die erste (28) und ggf. die zweite Koppelstrecke (29) jeweils zwischen einer Koppelelektrode (9,10,16,17,26,27) des Schlüssels (6,20) und einer Koppelelektrode (11,12,14,15,24,25) des Schließzylinders (1,19) ausgebildet ist.

4. Zutrittskontrollvorrichtung nach Anspruch 3, **dadurch gekennzeichnet, dass** die Koppelelektrode(n) (9,10) des Schlüssels (6,20) an oder in einem Schlüsselbart (7) des Schlüssels (6,20) angeordnet oder von diesem gebildet ist bzw. sind.

5. Zutrittskontrollvorrichtung nach Anspruch 3 oder 4, **dadurch gekennzeichnet, dass** die Koppelelektrode(n) (11,12,14,15,24,25) des Schließzylinders (1,19) dem Schlüsselkanal (3) zugewandt ist bzw. sind.

6. Zutrittskontrollvorrichtung nach Anspruch 3, 4 oder 5, **dadurch gekennzeichnet, dass** die Koppelelektroden (11,12) des Schließzylinders (1,19) von bezüglich des Schlüsselkanals (3) gegenüberliegenden Bereichen eines drehbaren Zylinderkerns (2) gebildet sind.

7. Zutrittskontrollvorrichtung nach einem der Ansprüche 3 bis 6, **dadurch gekennzeichnet, dass** die Koppelelektrode(n) (9,10,16,17,26,27) des Schlüssels (6,20) und die Koppelelektrode(n) (11,12,14,15,24,25) des Schließzylinders (1,19) im in den Schlüsselkanal (3) eingeführten Zustand des Schlüssels (6,20) gegenüberliegend angeordnet sind.

8. Zutrittskontrollvorrichtung nach Anspruch 3, **dadurch gekennzeichnet, dass** die für die zweite kapazitive Koppelstrecke (29) vorgesehene Koppelelektrode (16) des Schlüssels (6,20) an oder in einem Schlüsselbart (7) des Schlüssels (6,20) angeordnet oder von diesem gebildet ist und dass die für die erste kapazitive Koppelstrecke (28) vorgesehene Koppelelektrode (17) des Schlüssels (6,20) an oder in der Reide (8) des Schlüssels (6,20) angeordnet oder von dieser gebildet ist.

9. Zutrittskontrollvorrichtung nach Anspruch 3 oder 8, **dadurch gekennzeichnet, dass** die für die zweite kapazitive Koppelstrecke (29) vorgesehene Koppelelektrode (15) des Schließzylinders (1,19) an oder in einem drehbaren Zylinderkern (2) des Schlüssels (6,20) angeordnet oder von diesem gebildet ist und dass die für die erste kapazitive Koppelstrecke (28) vorgesehene Koppelelektrode (14) des Schließzylinders (1,19) an oder in einem Zylindergehäuse (5) des Schließzylinders (1,19) angeordnet oder von diesem gebildet ist.

10. Zutrittskontrollvorrichtung nach einem der Ansprüche 1 bis 9, **dadurch gekennzeichnet, dass** der Wechselstromkreis (21) eine Strom- bzw. Spannungsquelle (23) umfasst, die in einem Bauteil ausgewählt aus Schlüssel (6,20) und Schließzylinder (1,19) oder mit dem Schließzylinder (1,19) elektrisch verbundenem Element angeordnet ist, und dass der vom Wechselstromkreis gespeiste Energiespeicher bzw. elektrische Verbraucher im anderen Bauteil ausgewählt aus Schlüssel (6,20) und Schließzylinder (1,19) oder mit dem Schließzylinder (1,19) elektrisch verbundenem Element angeordnet ist.

11. Zutrittskontrollvorrichtung nach Anspruch 10, **dadurch gekennzeichnet, dass** die Strom- bzw. Spannungsquelle (23) einen elektrischen Energiespeicher, wie z.B. eine Batterie, oder einen Energiewandler zum Umwandeln von Bewegungsenergie in elektrische Energie aufweist.

12. Zutrittskontrollvorrichtung nach einem der Ansprüche 1 bis 11, **dadurch gekennzeichnet, dass** der Schlüssel (6,20) einen elektronischen Speicher (31) für Berechtigungsinformationen umfasst und dass der Schließzylinder (1,19) oder ein mit diesem verbundenes Element eine Zutrittskontrollschaltung umfasst, wobei Datenübertragungsmittel vorgesehen sind, sodass die Zutrittskontrollschaltung in Abhängigkeit von den Berechtigungsinformationen den Zutritt freigibt oder sperrt.

13. Zutrittskontrollvorrichtung nach Anspruch 12, **dadurch gekennzeichnet, dass** die Zutrittskontrollschaltung den elektrischen Verbraucher des Wechselstromkreises (21) ausbildet und/oder der vom Wechselstromkreis (21) gespeiste Energiespeicher die Zutrittskontrollschaltung speist und/oder die Strom- bzw. Spannungsquelle (23) die Zutrittskontrollschaltung mit elektrischer Energie speist.

14. Zutrittskontrollvorrichtung nach Anspruch 12 oder 13, **dadurch gekennzeichnet, dass** die Datenübertragungsmittel die erste und/oder die zweite kapazitive Koppelstrecke (28,29) zwischen dem Schlüssel (6,20) und dem Schließzylinder (1,19) umfassen.

15. Zutrittskontrollvorrichtung nach Anspruch 12 oder 13, **dadurch gekennzeichnet, dass** die Datenübertragungsmittel zur induktiven drahtlosen oder Infrarot-Übermittlung von Daten zwischen dem Schlüssel (6,20) und dem Schließzylinder (1,19) ausgebildet sind.

16. Schlüssel für eine Zutrittskontrollvorrichtung nach einem der Ansprüche 1 bis 15.

17. Schließzylinder für eine Zutrittskontrollvorrichtung nach einem der Ansprüche 1 bis 15.
